# EUROPÄISCHE PATENTANMELDUNG

(11) **EP 4 435 828 A1**
(43) Veröffentlichungstag der Anmeldung: **25.09.2024**
(21) Anmeldenummer: 23162810.8
(22) Anmeldetag: 20.03.2023
(51) Int. Cl.: H01H 71/08, H01H 9/52, H02B 1/56

(54) **SCHALTANORDNUNG**

(71) Anmelder: Siemens Aktiengesellschaft, 80333 München (DE)
(72) Erfinder: Köhler, Cornelius, 90491 Nürnberg (DE); Mittelmaier, Frederik, 91056 Erlangen (DE); Panicerski, Stanislav, 90449 Nürnberg (DE); Stumpf, Alexander, 91126 Schwabach (DE)
(74) Vertreter: Siemens Patent Attorneys

(57) **Zusammenfassung**

Die Erfindung betrifft eine Schaltanordnung, die zumindest:
- ein Gehäuse (2) mit einer Öffnung (2.3),
- mindestens einen Schalter (4),
- mindestens einen Anschlussblock (6, 102) mit mindestens zwei elektrischen Anschlussleitungen (6.1.n), die mit dem Schalter (4) elektrisch leitend verbindbar oder verbunden sind, und
- mindestens eine Kühleinrichtung (8) zur Kühlung des mindestens einen Schalters (4),
umfasst, wobei das Gehäuse (2) in mehrere Raumabschnitte (2.1, 2.2) unterteilt ist, so dass in einem ersten Raumabschnitt (2.1) der mindestens eine Schalter (4) angeordnet ist und der Anschlussblock (6, 102) und die Kühleinrichtung (8) über die Öffnung (2.3) in einen an den ersten Raumabschnitt (2.1) angrenzenden zweiten Raumabschnitt (2.2) im Inneren des Gehäuses (2) anordenbar und montierbar sind.

## Beschreibung

Die Erfindung betrifft eine Schaltanordnung, umfassend mindestens ein Gehäuse und mindestens einen Schalter sowie einen Anschlussblock zum Anschließen des mindestens einen Schalters.

Schalter, insbesondere Leistungsschalter, Hochstromschalter, Freiluftschalter, luftisolierte Schalter, sind konstruktiv derart auszulegen, dass diese eine hohe Nennstromtragfähigkeit aufweisen.

Damit sich die Anschlusskontakte des Schalters bei Nennstrombelastung im Dauerbetrieb nicht übermäßig erhitzen, muss die entstehende Wärme abgeführt werden. Hierzu umfasst die Schaltanordnung üblicherweise eine Kühleinrichtung.

Es ist die Aufgabe der Erfindung, eine Schaltanordnung der eingangs genannten Art bereitzustellen, die kompakt ausgebildet ist und eine verbesserte Kühlung für den mindestens einen Leistungsschalter bereitstellt.

Die Aufgabe wird erfindungsgemäß durch eine Schaltanordnung gelöst, die
- zumindest ein Gehäuse mit einer Öffnung,
- mindestens einen Schalter,
- mindestens einen Anschlussblock mit mindestens zwei elektrischen Anschlussleitungen, die mit dem Schalter elektrisch leitend verbindbar oder verbunden sind, und
- mindestens eine Kühleinrichtung, zum Beispiel eine aktive Kühlung, wie einen Lüfter, eine Klimaanlage oder eine andere geeignete Kühlung, wie eine durchströmbare Kühlplatte oder ein durchströmbarer Kühlkörper, zur Kühlung des mindestens einen Schalters umfasst, wobei das Gehäuse in mehrere Raumabschnitte unterteilt ist, so dass der mindestens eine Schalter in einem ersten Raumabschnitt (auch Schaltraum genannt) angeordnet ist und der Anschlussblock und die Kühleinrichtung über die Öffnung in einen an den ersten Raumabschnitt angrenzenden zweiten Raumabschnitt (auch Anschlussraum genannt) im Inneren des Gehäuses anordenbar und montierbar sind.

Beispielsweise kann das Gehäuse eine einzige Öffnung, insbesondere eine axiale Öffnung, aufweisen. Insbesondere kann das Gehäuse eine Form ähnlich eines Behälters aufweisen, dessen eine einzige offene Seite die Öffnung, insbesondere die axiale Öffnung, bildet. In anderen Worten: Die offene Seite des Gehäuses, insbesondere dessen Öffnung in axialer Richtung, ist für den Einbau beispielsweise des Anschlussblocks und/oder der Kühleinrichtung zugänglich.

Der Schalter kann beispielsweise als ein Leistungsschalter in Form eines Freiluftschalters, luftisolierten Schalters, Strömungsschalters, Blaskolbenschalters, Druckgasschalters oder einer anderen Art eines gekapselten Schalters ausgebildet sein.

Zum Verbinden der elektrischen Anschlussleitungen mit dem Schalter umfasst der Anschlussblock elektrische Anschlusskontakte, an welchen die elektrischen Anschlussleitungen direkt und von außen zugänglich anschließbar sind. Die elektrischen Anschlusskontakte sind mit dem Schalter elektrisch verbindbar oder verbunden.

Vorteilhafte Ausgestaltungen der Erfindung sind Gegenstand der Unteransprüche.

Die mit der Erfindung erzielten Vorteile bestehen insbesondere darin, dass eine integrierte Schaltanordnung gebildet ist, welche den mindestens einen Schalter, den Anschlussblock mit den Anschlussleitungen und den Anschlusskontakten und die Kühleinrichtungen in einem Gehäuse vereinigt. Über die Öffnung im Gehäuse kann die Kühleinrichtung in einfacher Art und Weise von außen getauscht werden. Zudem kann der Anschlussblock für verschiedenartige Anschlüsse, Anschlusskontakte und/oder Anschlussleitungen, insbesondere mit unterschiedlichen Abmessungen, zum Beispiel mit unterschiedlicher Breite, ausgelegt sein oder werden. Durch die Integration der Kühleinrichtung in das Gehäuse (auch Schaltgehäuse oder Schaltschrank genannt) ist eine besonders kompakte Schaltanordnung gegeben, welche insbesondere aufgrund der Integration des Anschlussblockes und der Kühleinrichtung in das Gehäuse der Schaltanordnung geringe Abmessungen, wie zum Beispiel eine geringe Einbautiefe, aufweisen.

Beispielsweise können der Anschlussblock und die Kühleinrichtung in dem zweiten Raumabschnitt nebeneinander, insbesondere übereinander, angeordnet sein, so dass die elektrischen Anschlussleitungen, insbesondere über die elektrischen Anschlusskontakte, an den Schalter anschließbar sind und die Kühleinrichtung unmittelbar an dem ersten Raumabschnitt zur Kühlung des mindestens einen Schalters anordenbar ist. Der Anschlussblock und die Kühleinrichtung können insbesondere an einer Außenseite des ersten, den Schaltraum des Schalters bildenden Raumabschnitts anliegen. Diese Außenseite des ersten Raumabschnitts grenzt unmittelbar an den zweiten Raumabschnitt in axialer Richtung im Inneren des Gehäuses an. Beispielsweise können der Anschlussblock und die Kühleinrichtung auf einer Vorderseite oder einer Rückseite des ersten Raumabschnitts oder des Schaltraums im Inneren des Gehäuses angeordnet und lösbar gehalten sein. Eine solche Anordnung auf einer Vorderseite oder Rückseite ermöglicht ein schnelles Montieren des Anschlussblockes und/oder der Kühleinrichtung von vorne beziehungsweise von hinten in das Gehäuse hinein oder aus dem Gehäuse heraus.

Eine Weiterbildung sieht vor, dass der Anschlussblock und/oder die Kühleinrichtung von außen zugänglich im Gehäuse angeordnet sind beziehungsweise ist. Dies ermöglicht eine einfache Austauschbarkeit der Kühleinrichtung von der Schaltanordnung.

Die Kühleinrichtung kann darüber hinaus ein Kühlgehäuse umfassen. Beispielsweise kann das Kühlgehäuse separat ausgebildet sein. Dabei kann beispielsweise eine als Lüfter oder Klimaanlage ausgebildete Kühleinrichtung in dem separaten Kühlgehäuse angeordnet und gehalten sein. Alternativ kann das Kühlgehäuse durch ein Teilgehäuse eines Lüfters oder einer Klimaanlage gebildet sein.

Zusätzlich können die Kühleinrichtung und der Anschlussblock zu einer gemeinsamen Einheit vormontiert werden oder sein. Die gemeinsame Einheit von Kühleinrichtung und Anschlussblock (auch Vormontageeinheit genannt) kann beispielsweise nach der Vormontage in einfacher Art und Weise über die Öffnung (auch Gehäuseöffnung genannt) in das Gehäuse der Schaltanordnung montiert werden. Beispielsweise kann die gemeinsame Einheit oder jede einzelne Komponente, wie beispielsweise die Kühleinrichtung und/oder der Anschlussblock, als eine Einschubkassette ausgebildet sein, die über die Öffnung mittels einer Führung, zum Beispiel einer Schienenführung, in das Gehäuse eingeführt und mittels einer Rastverbindung und/oder Steckverbindung im Gehäuse der Schaltanordnung lösbar befestigt werden kann. Hierdurch ist eine einfache Montage und Befestigung der Komponenten im Gehäuse der Schaltanordnung ermöglicht.

Das Kühlgehäuse kann ferner beispielsweise derart eingerichtet und in Bezug auf den Anschlussblock derart angeordnet sein, dass zumindest die elektrischen Anschlussleitungen und/oder die elektrischen Anschlusskontakte voneinander elektrisch isoliert sind. Durch eine solche elektrische Isolierung der elektrischen Anschlussleitungen und/oder der elektrischen Anschlusskontakte voneinander können Spannungsüberschläge oder Kurzschlüsse vermieden werden.

Hierzu kann das Kühlgehäuse zum Beispiel aus einem elektrisch isolierenden Material gebildet sein.

In einer möglichen Ausführungsform kann das Kühlgehäuse eine Anzahl von ersten Trennelementen umfassen, die eingerichtet sind, die elektrischen Anschlussleitungen und/oder die elektrischen Anschlusskontakte voneinander zu trennen. Diese ersten Trennelemente sind vorgesehen, um die Isolation der elektrischen Anschlussleitungen und deren elektrischen Anschlusspunkte oder Anschlusskontakte zu verstärken. Beispielsweise können die ersten Trennelemente senkrecht, insbesondere senkrecht zur axialen Richtung oder vertikal, vom Kühlgehäuse abragen und sich in Richtung des Anschlussblocks, insbesondere in axialer Richtung der Schaltanordnung, derart erstrecken, dass jeweils eines der ersten Trennelemente in einen Trennraum zwischen zwei benachbarten elektrischen Anschlussleitungen und/oder zwischen zwei benachbarten elektrischen Anschlusskontakten hineinragt. Dieser Trennraum (auch Zwischenraum genannt) ist insbesondere derart eingerichtet, dass ein Sicherheitsabstand zwischen den zwei benachbarten elektrischen Anschlussleitungen und/oder benachbarten elektrischen Anschlusskontakten zur Vermeidung von Spannungsüberschlägen oder Kurzschlüssen eingehalten wird.

Zusätzlich kann der Anschlussblock eine Anzahl von zweiten Trennelementen umfassen, die eingerichtet sind, zumindest die elektrischen Anschlussleitungen und/oder die elektrischen Anschlusskontakte voneinander zu trennen. Beispielsweise können die zweiten Trennelemente senkrecht, insbesondere senkrecht zur axialen Richtung oder vertikal, vom Anschlussblock abragen und sich, insbesondere in axialer Richtung der Schaltanordnung, derart erstrecken, dass jeweils eines der zweiten Trennelemente in den Trennraum zwischen zwei benachbarten elektrischen Anschlussleitungen hineinragt.

In einer möglichen Ausführungsform können die ersten Trennelemente und/oder die zweiten Trennelemente jeweils als Trennlamellen oder Trennwände ausgebildet sein. Die Trennelemente können beispielsweise (hochkant) als Platten, Lamellen oder Wände ausgebildet sein. Die Trennelemente können eben oder wellig oder eine andere geeignete Form aufweisen.

Darüber hinaus können die ersten Trennelemente und die zweiten Trennelemente derart ausgebildet sein, dass jeweils ein Paar eines ersten Trennelements und eines zweiten Trennelements in einem der Trennräume zumindest zwischen zwei benachbarten elektrischen Anschlussleitungen und/oder zwei benachbarten elektrischen Anschlusskontakten angeordnet ist. Beispielsweise können jeweils ein erstes Trennelement und ein zweites Trennelement, welche in denselben Trennraum zwischen zwei benachbarten elektrischen Anschlussleitungen und/oder zwei benachbarten elektrischen Anschlusskontakten hineinragen, einander zumindest bereichsweise überlappend in diesem Trennraum angeordnet sein. Hierzu können die freien Enden des ersten Trennelements und des zweiten Trennelements derart im überlappenden Bereich korrespondierend zueinander ausgebildet sein, dass diese beiden Trennelemente oder das Paar von diesen Trennelementen in denselben Trennraum eine konstant dicke Isolationsschicht zwischen den zwei benachbarten elektrischen Anschlussleiten und/oder den zwei benachbarten elektrischen Anschlusskontakten bilden. Zum Beispiel können die freien Enden entgegengesetzt zueinander angefast ausgebildet sein (auch zueinander entgegengesetzt abgeschrägte Enden oder zueinander entgegengesetzt angeschrägte Enden genannt).

Die Kühleinrichtung kann einen Lüfter oder eine Klimaanlage umfassen oder durch einen Lüfter oder eine Klimaanlage gebildet sein. Das Gehäuse der Schaltanordnung kann im Bereich des Anschlussblocks und/oder der Kühleinrichtung mindestens eine Gehäuseklappe umfassen, welche bewegbar, insbesondere schwenkbar, gehalten ist. Die Gehäuseklappe ist beispielsweise als Schutzklappe (auch Anschlussdeckel und/oder Kühldeckel genannt) ausgebildet und schützt den Anschlussblock und/oder die Kühleinrichtung nach außen vor einer Verschmutzung oder anderen Einflüssen ab. Darüber hinaus deckt die Gehäuseklappe zumindest die elektrischen Anschlussleitungen und deren elektrische Anschlusskontakte berührungssicher ab. Mit anderen Worten: Die Gehäuseklappe stellt im geschlossenen Zustand sicher, dass die spannungstragenden Komponenten, insbesondere die elektrischen Anschlussleitungen und deren elektrische Anschlusskontakte nicht berührt werden können. Die Gehäuseklappe kann zusätzlich mit Befestigungselementen versehen sein, welche für eine bewegliche Befestigung der Gehäuseklappen an dem Gehäuse, zum Beispiel mittels eines Gelenks, und optional für eine Verriegelung, zum Beispiel mittels eines Schlosses, ausgebildet sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 schematisch in perspektivischer Darstellung eine erste Ausführungsform einer Schaltanordnung und deren Gehäuse von hinten,
FIG 2 schematisch in perspektivischer Darstellung die Schaltanordnung und dessen Gehäuses von vorne,
FIG 3 schematisch in perspektivischer Darstellung die Schaltanordnung gemäß Figur 2 mit einer geöffneten Gehäuseklappe,
FIG 4 schematisch in Draufsicht in vergrößerter Darstellung einen Anschlussbereich der Schaltanordnung bei geöffneter Gehäuseklappe,
FIG 5 schematisch in Draufsicht in vergrößerter Darstellung einen Bereich zwischen zwei benachbarten Anschlusskontakten mit einfach belegtem Anschluss,
FIG 6 schematisch in Seitenansicht die Schaltanordnung in teilweise montiertem Zustand,
FIG 7 schematisch in Seitenansicht die Schaltanordnung in vollständig montiertem Zustand,
FIG 8 schematisch in perspektivischer Darstellung eine zweite Ausführungsform einer Schaltanordnung mit doppelt belegten Anschlüssen, und
FIG 9 schematisch in Draufsicht und vergrößerter Darstellung zwei benachbarte Anschlusskontakte mit doppelt belegten Anschlüssen.

Einander entsprechende Teile sind in den Figuren mit denselben Bezugszeichen versehen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

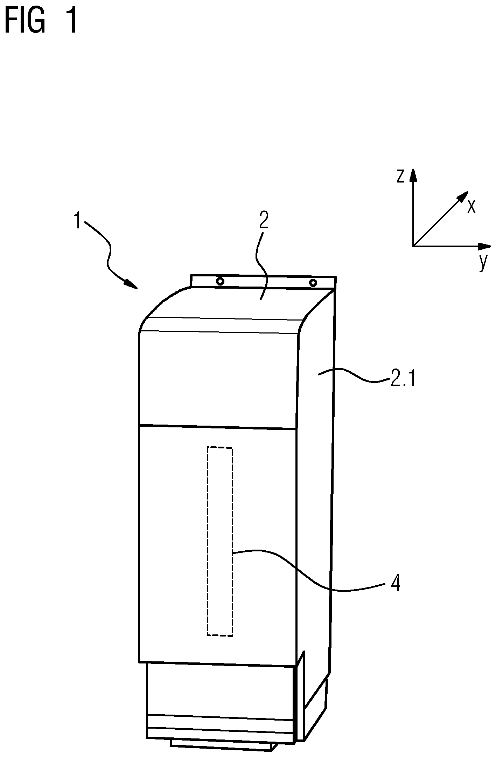

Die Figur 1 zeigt schematisch in perspektivischer Darstellung eine erste Ausführungsform einer Schaltanordnung 1 von einer ersten Seite, insbesondere von einer Hinterseite oder von hinten.

Die Schaltanordnung 1 ist als eine integrierte Anordnung ausgebildet. Die Schaltanordnung 1 umfasst ein Gehäuse 2, in welchem alle Komponenten der Schaltanordnung 1 vereint in dem Gehäuse 2 angeordnet sind.

Die Schaltanordnung 1 umfasst als mindestens eine Komponente einen Schalter 4, insbesondere einen Leistungsschalter in Form eines Freiluftschalters, luftisolierten Schalters, Strömungsschalters, Blaskolbenschalters, Druckgasschalters oder einer anderen Art eines gekapselten Schalters. Es können auch mehrere Schalter 4 in dem Gehäuse 2 angeordnet sein.

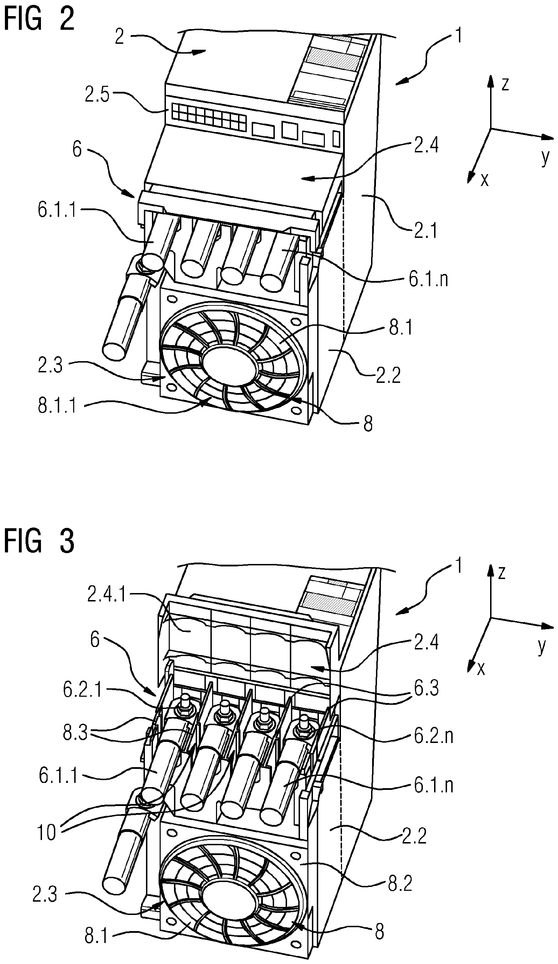

Das Gehäuse 2 ist in mehrere Raumabschnitte 2.1 bis 2.2 unterteilt. Ein erster Raumabschnitt 2.1 ist zur Aufnahme des Schalters 4 ausgebildet. Der erste Raumabschnitt 2.1 wird auch Schaltraum oder Schaltschrank genannt. Ein an den ersten Raumabschnitt 2.1 angrenzender zweiter Raumabschnitt 2.2 ist in Figur 2 dargestellt und wird nachfolgend näher beschrieben.

Die Figur 2 zeigt schematisch in perspektivischer Darstellung die Schaltanordnung 1 gemäß Figur 1 von einer zur ersten Seite entgegensetzten zweiten Seite, insbesondere von vorne oder einer Vorderseite.

Die Schaltanordnung 1 umfasst darüber hinaus einen Anschlussblock 6 mit mindestens zwei elektrischen Anschlussleitungen 6.1.1 bis 6.1.n, die mit dem Schalter 4 elektrisch leitend verbindbar oder verbunden sein.

Des Weiteren umfasst die Schaltanordnung 1 mindestens eine Kühleinrichtung 8 zur Kühlung des mindestens einen Schalters 4.

Der zweite Raumabschnitt 2.2 ist eingerichtet, den Anschlussblock 6 mit den Anschlussleitungen 6.1.1 bis 6.1.n und die Kühleinrichtung 8 aufzunehmen und zu halten.

Das Gehäuse 2 weist mindestens eine Öffnung 2.3 auf. Das Gehäuse 2 ist in die mindestens zwei Raumabschnitte 2.1 bis 2.2 unterteilt, wobei der mindestens eine Schalter 4 in dem ersten Raumabschnitt 2.1 angeordnet ist und der Anschlussblock 6 und die Kühleinrichtung 8 über die Öffnung 2.3 im Gehäuse 2 in den an den ersten Raumabschnitt 2.1 angrenzenden zweiten Raumabschnitt 2.2 im Inneren des Gehäuses 2 anordenbar und montierbar sind.

Der zweite Raumabschnitt 2.2 des Gehäuses 2 weist die axiale Öffnung 2.3 auf. Die axiale Öffnung 2.3 kann als einzige Öffnung am Gehäuse 2 vorgesehen sein. Das Gehäuse 2 ist beispielsweise als ein einseitig offener Behälter ausgebildet. Die offene Seite des Gehäuses 2, insbesondere dessen Öffnung 2.3 in axialer Richtung, ist für den Einbau des Anschlussblocks 6 und/oder der Kühleinrichtung 8 zugänglich. Mit anderen Worten: Der zweite Raumabschnitt 2.2 ist über die axiale Öffnung 2.3 von außen zugänglich. Der zweite Raumabschnitt 2.2, in welchem der Anschlussblock 6 und die Kühleinrichtung 8 anordenbar oder lösbar angeordnet sind, wird auch Anschlussraum genannt.

Der Anschlussblock 6 und die Kühleinrichtung 8 sind in dem zweiten Raumabschnitt 2.2 nebeneinander angeordnet, so dass die Anschlussleitungen 6.1.1 bis 6.1.n an dem Schalter 4 anschließbar sind und die Kühleinrichtung 8 unmittelbar an dem ersten Raumabschnitt 2.1 zur Kühlung des mindestens einen Schalters 4 anordenbar ist. Insbesondere können der Anschlussblock 6 und die Kühleinrichtung 8 in Hochrichtung (z-Richtung) oder in axialer Richtung (x-Richtung) in einer Ebene übereinander und/oder in axialer Richtung (x-Richtung) teilweise hintereinander angeordnet sein.

Der Anschlussblock 6 und die Kühleinrichtung 8 können insbesondere an einer in Bezug auf das Gehäuse 2 inneren oder innenliegenden Außenseite des ersten, den Schaltraum des Schalters 4 bildenden Raumabschnitts 2.1 anliegen. Diese Außenseite des ersten Raumabschnitts 2.1 grenzt unmittelbar an den zweiten Raumabschnitt 2.2 in axialer Richtung (im Beispiel in x-Richtung) im Inneren des Gehäuses 2 an.

Im gezeigten Beispiel sind der Anschlussblock 6 und die Kühleinrichtung 8 im Inneren des Gehäuses 2 auf einer Vorderseite des ersten Raumabschnitts 2.1 im zweiten Raumabschnitt 2.2 angeordnet und dort lösbar gehalten.

Sowohl der Anschlussblock 6 als auch die Kühleinrichtung 8 sind somit über die Öffnung 2.3 von außen zugänglich im Gehäuse 2 angeordnet. Dies ermöglicht eine einfache Austauschbarkeit der Kühleinrichtung 8 von der Schaltanordnung 1 und/oder eine einfache Montage/Demontage der Anschlussleitungen 6.1.1 bis 6.1.n am Anschlussblock 6.

Für eine einfache Zugänglichkeit zum Anschlussblock 6 kann das Gehäuse 2 im Bereich des zweiten Raumabschnitts 2.2 eine Gehäuseklappe 2.4 (auch Gehäusedeckel oder Verschlussdeckel genannt) umfassen.

Die Gehäuseklappe 2.4 ist beweglich, zum Beispiel mittels eines Drehgelenks, am Gehäuse 2, insbesondere in einem Übergang vom ersten Raumabschnitt 2.1 zum zweiten Raumabschnitt 2.2, gelagert. Figur 2 zeigt die Gehäuseklappe 2.4 in einer den Anschlussblock 6 abdeckenden und schützenden Stellung.

Der erste Raumabschnitt 2.1 und der zweite Raumabschnitt 2.2 können beispielsweise durch eine Trennwand 2.5 voneinander getrennt sein. Die Trennwand 2.5 ist insbesondere als ein Gitter, insbesondere ein Lüftungsgitter, ausgebildet, so dass ein Kühlmedium der Kühleinrichtung 8 vom zweiten Raumabschnitt 2.2 in den ersten Raumabschnitt 2.1 zur Kühlung des Schalters 4 im ersten Raumabschnitt 2.1 strömen kann.

Die Kühleinrichtung 8 kann als ein Lüfter 8.1 oder eine Klimaanlage (nicht näher dargestellt) ausgebildet sein. Der Lüfter 8.1 ist derart im zweiten Raumabschnitt 2.2 angeordnet, dass eine Stromeingangsseite 8.1.1 im Bereich der axialen Öffnung 2.3 des Gehäuses 2 angeordnet ist. Eine (nicht dargestellte) Stromausgangsseite des Lüfters 8.1 ist in Richtung des ersten Raumabschnitts 2.1 angeordnet.

Figur 3 zeigt schematisch in perspektivischer Darstellung die Schaltanordnung 1 gemäß Figur 2 mit einer geöffneten Gehäuseklappe 2.4.

Der Anschlussblock 6 umfasst eine Anzahl von elektrischen Anschlusskontakten 6.2.1 bis 6.2.n. Die elektrischen Anschlusskontakte 6.2.1 sind als Einfachkontakte ausgebildet und dienen der elektrischen Verbindung und dem Anschließen der elektrischen Anschlussleitungen 6.1.1 bis 6.1.n. An einem der elektrischen Anschlusskontakte 6.2.n kann jeweils eine der elektrischen Anschlussleitungen 6.1.n direkt angeschlossen werden.

Die elektrischen Anschlusskontakte 6.2.n wiederum sind in herkömmlicher Art und Weise mit dem Schalter 4 im ersten Raumabschnitt 2.1 elektrisch verbindbar oder verbunden (nicht dargestellt).

Die Gehäuseklappe 2.4 weist auf einer Klappeninnenseite 2.4.1 ein an zu den Anschlusskontakten 6.2.n und den Anschlussleitungen 6.1.n korrespondierende Form, insbesondere ein entsprechendes Innenprofil, auf.

Der Anschlussblock 6 (auch elektrischer Anschlussblock 6 genannt) ist in axialer Richtung (x-Richtung) vor der Kühleinrichtung 8 im zweiten Raumabschnitt 2.2 angeordnet. In Hochrichtung (z-Richtung) können der Anschlussblock 6 und die Kühleinrichtung 8 übereinander in dem zweiten Raumabschnitt 2.2 angeordnet sein. Insbesondere können die elektrischen Anschlussleitungen 6.1.n über der Kühleinrichtung 8 an den elektrischen Anschlusskontakten 6.2.n einfach und von außen über die Öffnung 2.3 auch von oben angeschlossen werden, wenn die Gehäuseklappe 2.4 geöffnet ist.

Die Kühleinrichtung 8 kann in einfacher Art und Weise von vorne in die Öffnung 2.3 und den zweiten Raumabschnitt 2.2 eingesetzt und am Gehäuse 2 montiert werden.

Die Kühleinrichtung 8 kann darüber hinaus ein separates Gehäuse 8.2 (im Weiteren Kühlgehäuse 8.2 genannt) umfassen. Dabei ist die beispielsweise als Lüfter 8.1 ausgebildete Kühleinrichtung 8 in dem separaten Kühlgehäuse 8.2 angeordnet und gehalten. Alternativ kann das Kühlgehäuse 8.2 durch ein Teilgehäuse des Lüfters 8.1 gebildet sein.

Das Kühlgehäuse 8.2 ist beispielsweise derart eingerichtet und in Bezug auf den Anschlussblock 6 derart angeordnet, dass die mindestens zwei elektrischen Anschlussleitungen 6.1.n voneinander elektrisch isoliert sind. Hierzu kann das Kühlgehäuse 8.2 zum Beispiel aus einem elektrisch isolierenden Material gebildet sein.

Das Kühlgehäuse 8.2 kann hierzu beispielsweise eine Anzahl von ersten Trennelementen 8.3 umfassen, die eingerichtet sind, die elektrischen Anschlussleitungen 6.1.n und/oder die elektrischen Anschlusskontakte 6.2.n voneinander zu trennen. Diese ersten Trennelemente 8.3 sind vorgesehen, um die Isolation der elektrischen Anschlussleitungen 6.1.n und/oder deren elektrischen Anschlusskontakte 6.2.n zu verstärken.

Beispielsweise können die ersten Trennelemente 8.3 senkrecht, insbesondere senkrecht zur axialen Richtung (x-Richtung) oder vertikal, vom Kühlgehäuse 8.2 nach oben abragen und sich in Richtung des Anschlussblocks 6, insbesondere in axialer Richtung (x-Richtung), derart erstrecken, dass jeweils eines der ersten Trennelemente 8.3 in einen Trennraum 10 jeweils zwischen zwei benachbarten elektrischen Anschlussleitungen 6.1.n und/oder zwischen zwei benachbarten elektrischen Anschlusskontakten 6.2.n hineinragt.

Zusätzlich kann der Anschlussblock 6 eine Anzahl von zweiten Trennelementen 6.3 umfassen, die eingerichtet sind, die elektrischen Anschlussleitungen 6.1.n und/oder die elektrischen Anschlusskontakte 6.2.n voneinander zu trennen. Beispielsweise können die zweiten Trennelemente 6.3 senkrecht, insbesondere senkrecht zur axialen Richtung (x-Richtung) oder vertikal, vom Anschlussblock 6 abragen und sich, insbesondere in axialer Richtung (x-Richtung), derart erstrecken, dass jeweils eines der zweiten Trennelemente 6.3 in den Trennraum 10 zwischen zwei benachbarten elektrischen Anschlussleitungen 6.1.n und/oder zwischen zwei benachbarten elektrischen Anschlusskontakten 6.2.n hineinragt.

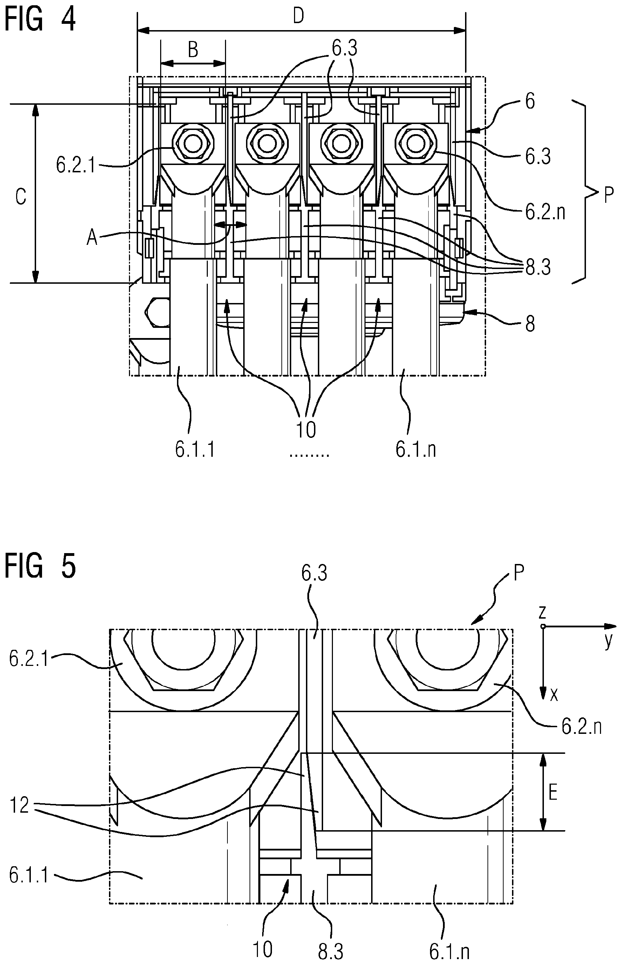

Figur 4 zeigt schematisch in Draufsicht von oben und in vergrößerter Darstellung den Anschlussblock 6 und die Kühleinrichtung 8 bei geöffneter Gehäuseklappe 2.4.

Jeweils zwischen zwei benachbarten elektrischen Anschlussleitungen 6.1.n und/oder zwei benachbarten elektrischen Anschlusskontakten 6.2.n ist der Trennraum 10 gebildet. Der jeweilige Trennraum 10 ist beispielsweise derart eingerichtet, dass ein Sicherheitsabstand A zwischen zwei benachbarten elektrischen Anschlussleitungen 6.1.n und/oder zwei benachbarten elektrischen Anschlusskontakten 6.2.n zur Vermeidung von Spannungsüberschlägen oder Kurzschlüssen eingehalten wird. Zusätzlich kann der Sicherheitsabstand A von einer Mindestbreite B der jeweiligen elektrischen Anschlussleitung 6.1.n und/oder des jeweiligen elektrischen Anschlusskontaktes 6.2.n abhängig sein.

Die Länge der ersten Trennelemente 8.3 und/oder die Länge der zweiten Trennelemente 6.3 in axialer Richtung (x-Richtung) gesehen kann beispielsweise von einer Mindestanschlusslänge C der jeweiligen elektrischen Anschlussleitung 6.1.n und/oder des jeweiligen elektrischen Anschlusskontaktes 6.2.n abhängig sein.

Die elektrischen Anschlussleitungen 6.1.n und die zugehörigen elektrischen Anschlusskontakte 6.2.n sind in Querrichtung (y-Richtung) gesehen parallel nebeneinander und mit dem Sicherheitsabstand A zueinander beabstandet angeordnet. Die Summe aller Anschlussleitungen 6.1.n und der zugehörigen Anschlusskontakte 6.2.n in Querrichtung (y-Richtung) gesehen repräsentiert eine Mindestanschlussbreite D.

Die ersten Trennelemente 8.3 und die zweiten Trennelemente 6.3 können jeweils als Trennwände oder Trennlamellen ausgebildet sein. Die ersten Trennelemente 8.3 und die zweiten Trennelemente 6.3 können hochkant angeordnet sein und beispielsweise eben ausgebildet sein. Die ersten Trennelemente 8.3 und die zweiten Trennelemente 6.3 können alternativ wellig oder kurvig verlaufen oder mit Versätzen oder Absätzen versehen sein. Die ersten Trennelemente 8.3 und die zweiten Trennelemente 6.3 können mit zusätzlichen Versteifungselementen, insbesondere Rippen oder anderen geeigneten Mitteln, versehen sein.

Figur 5 zeigt schematisch in Draufsicht in vergrößerter Darstellung einen Bereich zwischen zwei benachbarten elektrischen Anschlusskontakten 6.2. n mit einfach belegtem Anschluss. Mit anderen Worten. An jedem elektrischen Anschlusskontakt 6.2.n ist eine einzige elektrische Anschlussleitung 6.1.n angeschlossen.

Darüber hinaus können die ersten Trennelemente 8.3 und die zweiten Trennelemente 6.3 derart ausgebildet sein, dass jeweils ein Paar P eines ersten Trennelements 8.3 und eines zweiten Trennelements 6.3 in einem der Trennräume 10 zwischen zwei benachbarten elektrischen Anschlussleitungen 6.1.n und zwei benachbarten elektrischen Anschlusskontakten 6.2.n angeordnet ist.

Beispielsweise ragen das erste Trennelement 8.3 und das zweite Trennelement 6.3 eines jeden Paares P in denselben Trennraum 10 zwischen zwei benachbarten elektrischen Anschlussleitungen 6.1.n und zwei benachbarten elektrischen Anschlusskontakten 6.2.n hinein. Zusätzlich können das erste Trennelement 8.3 und das zweite Trennelement 6.3 eines jeden Paares P in diesem Trennraum 10 einander zumindest bereichsweise überlappend angeordnet sein.

Hierzu können freie Enden 12 des ersten Trennelements 8.3 und des zweiten Trennelements 6.3 derart in einem überlappenden Bereich E korrespondierend zueinander ausgebildet sein, dass diese freien Enden 12 der beiden Trennelemente 8.3 und 6.3 eine konstant dicke Isolationsschicht zwischen den zwei benachbarten elektrischen Anschlussleiten 6.1.n und den zwei benachbarten elektrischen Anschlusskontakten 6.2.n bilden. Zum Beispiel können die freien Enden 12 entgegengesetzt zueinander angefast ausgebildet sein oder auch zueinander entgegengesetzt abgeschrägte Enden oder zueinander entgegengesetzt angeschrägte Enden aufweisen.

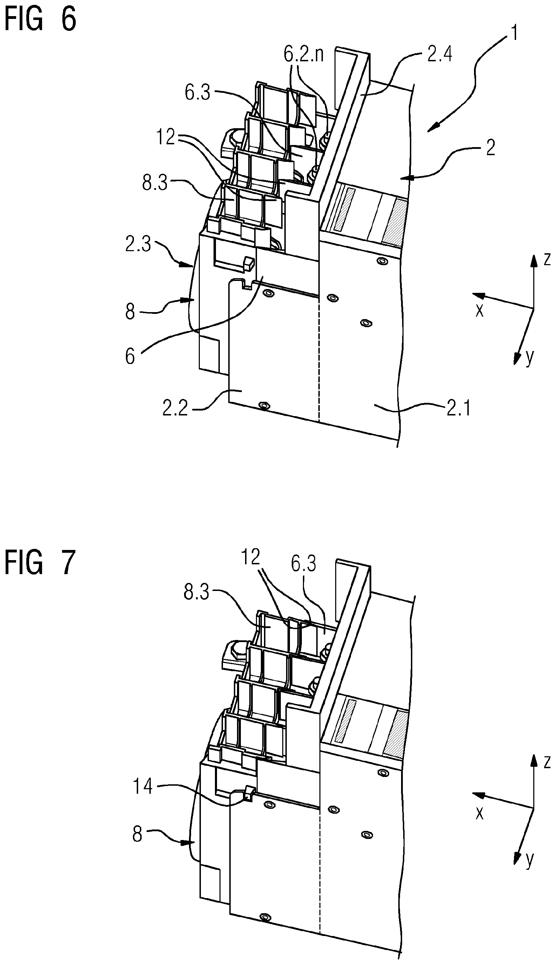

Figur 6 zeigt schematisch in Seitenansicht die Schaltanordnung 1 in einem ersten teilweise montierten Zustand.

Im Beispiel nach Figur 6 ist der Schalter 4 (dargestellt in Figur 1) in dem ersten Raumabschnitt 2.1 des Gehäuses 2 der Schaltanordnung 1 montiert. Die Gehäuseklappe 2.4 ist geöffnet. Der Anschlussblock 6 ist ohne Anschlussleitungen 6.1.n und mit vormontierten Anschlusskontakten 6.2.n über die Öffnung 2.3 in den an den ersten Raumabschnitt 2.1 angrenzenden zweiten Raumabschnitt 2.2 eingesetzt und dort vorpositioniert, aber noch nicht endmontiert.

Die Kühleinrichtung 8 ist als ein Modul vormontiert und wird in die Öffnung 2.3 von vorne in das Gehäuse 2 in dessen zweiten Raumabschnitt 2.2 eingesetzt und an dem Gehäuse 2 und/oder an dem bereits eingesetzten und montierten Anschlussblock 6 montiert, insbesondere lösbar befestigt.

Beim Einsetzen und Montieren der Kühleinrichtung 8 an dem Anschlussblock 6 werden deren freien Enden 12 der Trennelemente 6.3, 8.3 ineinandergesteckt.

Alternativ können die Kühleinrichtung 8 und der Anschlussblock 6 zu einer gemeinsamen Einheit vormontiert werden oder sein (nicht näher dargestellt). Die gemeinsame Einheit von Kühleinrichtung 8 und Anschlussblock 6 (auch Vormontageeinheit genannt) kann beispielsweise nach der Vormontage in einfacher Art und Weise über die Öffnung 2.3 in das Gehäuse 2 der Schaltanordnung 1 montiert werden. Beispielsweise kann die gemeinsame Einheit oder jede einzelne Komponente, wie beispielsweise die Kühleinrichtung 8 und/oder der Anschlussblock 6, als eine Einschubkassette ausgebildet sein, die über die Öffnung 2.3 mittels einer Führung, zum Beispiel einer Schienenführung, in das Gehäuse 2 eingeführt und mittels einer Rastverbindung 14 (in Figur 7 dargestellt) und/oder Steckverbindung im Gehäuse 2 lösbar befestigt werden kann.

Figur 7 zeigt schematisch in Seitenansicht die Schaltanordnung 1 in vollständig montiertem Zustand (auch endmontierter Zustand genannt) . Die Kühleinrichtung 8 ist mittels der Rastverbindung 14 lösbar am Gehäuse 2 gehalten. Die freien Enden 12 der Trennelemente 6.3, 8.3 sind überlappend einander gesteckt.

Die Anschlusskontakte 6.2.n sind bei geöffneter Gehäuseklappe 2.4 von vorne und oben frei zugänglich, so dass die Anschlussleitungen 6.1.n (dargestellt in Figur 2) montiert oder demontiert werden können.

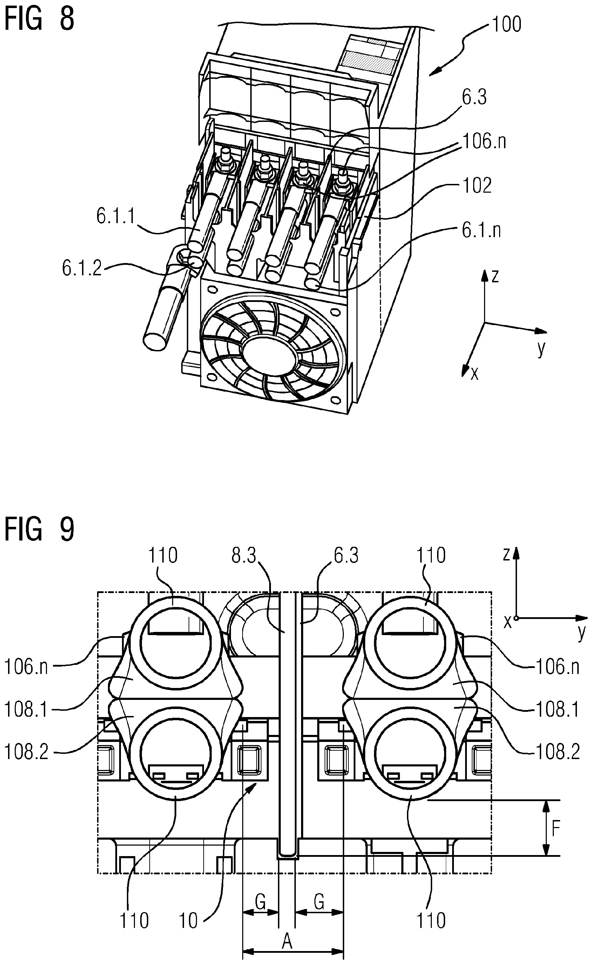

Figur 8 zeigt schematisch in perspektivischer Darstellung eine zweite Ausführungsform einer Schaltanordnung 100 mit doppelt belegten Anschlüssen.

Die Schaltanordnung 100 unterscheidet sich von der Schaltanordnung 1 gemäß Figuren 2 bis 7 nur im Anschlussbereich der Anschlussleitungen 6.1.n. Die Schaltungsanordnung 100 umfasst einen alternativen Anschlussblock 102, der als ein Doppelanschluss ausgelegt ist und eine Anzahl von alternativen elektrischen Anschlusskontakten 106.n umfasst. Mit anderen Worten: Der Anschlussblock 102 unterscheidet sich nur in der Form der Anschlusskontakte 106.n. Die zweiten Trennelemente 6.3 des alternativen Anschlussblocks 102 unterscheiden sich von den zweiten Trennelementen 6.3 des Anschlussblocks 6 nach Figuren 2 bis 7 nur in den Abmessungen.

Figur 9 zeigt schematisch in Draufsicht und vergrößerter Darstellung zwei benachbarte alternative elektrische Anschlusskontakte 106.n mit doppelt belegten Anschlüssen des alternativen Anschlussblocks 102.

Ein jeder Anschlusskontakt 106.n weist zwei in Hochrichtung (z-Richtung) entgegengesetzt geformte Anschlusszungen 108.1, 108.2 auf. Die jeweiligen Anschlusszungen 108.1, 108.2 eines jeden Anschlusskontaktes 106.n kann zusätzlich Kabelaufnahmen 110 zum Führen und Einsetzen der zugehörigen elektrischen Anschlussleitung 6.1.n (dargestellt in Figur 8) aufweisen. Die jeweilige Kabelaufnahme 110 ist beispielsweise als ein Kabelring ausgebildet.

In dem Trennraum 10 zwischen zwei benachbarten elektrischen Anschlusskontakten 106.n sind die Trennelemente 6.3 und 8.3 in Form von senkrechten Trennwänden in analoger Art und Weise angeordnet, wie in den Figuren 2 bis 7 dargestellt. Aufgrund des Doppelanschluss weisen die Trennelemente 6.3 und 8.3 in Hochrichtung (z-Richtung) gesehen eine größere Höhe auf als die Trennelemente 6.3 und 8.3 des Einfachanschlusses nach Figuren 2 bis 7.

Die Trennelemente 6.3 und/oder 8.3 weisen insbesondere solche Abmessungen auf, dass sie den Anschlussbereich, insbesondere zumindest die elektrischen Anschlusskontakte 6.2.n, 106.n, sowohl in Hochrichtung (z-Richtung) als auch in axialer Richtung (x-Richtung) überragen.

Figur 9 zeigt beispielhaft eine Mindestüberlänge F der Trennelemente 6.3 und 8.3 in Hochrichtung (z-Richtung). Der Sicherheitsabstand A (auch Mindestsicherheitsabstand) zwischen zwei benachbarten elektrischen Anschlusskontakten 106.n, 6.2.n ist in Figuren 4 und 9 dargestellt. Ein Mindestabstand G zwischen den Trennelementen 6.3, 8.3 und den angrenzenden elektrischen Anschlusskontakten 106.n ist in Figur 9 dargestellt.

Unabhängig vom grammatikalischen Geschlecht eines bestimmten Begriffs sind Personen mit männlicher, weiblicher oder anderer Geschlechteridentität mit umfasst.

## Patentansprüche

1. Schaltanordnung (1, 100), umfassend zumindest:
- ein Gehäuse (2) mit einer Öffnung (2.3),
- mindestens einen Schalter (4),
- mindestens einen Anschlussblock (6, 102) mit mindestens zwei elektrischen Anschlussleitungen (6.1.n), die mit dem Schalter (4) elektrisch leitend verbindbar oder verbunden sind, und
- mindestens eine Kühleinrichtung (8) zur Kühlung des mindestens einen Schalters (4),
wobei das Gehäuse (2) in mehrere Raumabschnitte (2.1, 2.2) unterteilt ist, so dass in einem ersten Raumabschnitt (2.1) der mindestens eine Schalter (4) angeordnet ist und der Anschlussblock (6, 102) und die Kühleinrichtung (8) über die Öffnung (2.3) in einen an den ersten Raumabschnitt (2.1) angrenzenden zweiten Raumabschnitt (2.2) im Inneren des Gehäuses (2) anordenbar und montierbar sind.

2. Schaltanordnung (1, 100) nach Anspruch 1,
wobei der Anschlussblock (6, 102) und die Kühleinrichtung (8) in dem zweiten Raumabschnitt (2.2) nebeneinander angeordnet sind, so dass die elektrischen Anschlussleitungen (6.1.n) an den Schalter (4) anschließbar sind und die Kühleinrichtung (8) unmittelbar an dem ersten Raumabschnitt (2.1) zur Kühlung des mindestens einen Schalters (4) anordenbar ist.

3. Schaltanordnung (1, 100) nach Anspruch 1 oder 2, wobei der Anschlussblock (6, 102) und/oder die Kühleinrichtung (8) von außen zugänglich im Gehäuse (2) angeordnet sind beziehungsweise ist.

4. Schaltanordnung (1, 100) nach einem der vorhergehenden Ansprüche, wobei die Kühleinrichtung (8) ein separates Kühlgehäuse (8.2) umfasst.

5. Schaltanordnung (1, 100) nach Anspruch 4, wobei das Kühlgehäuse (8.2) derart eingerichtet und in Bezug auf den Anschlussblock (6, 102) derart angeordnet ist, dass zumindest die elektrischen Anschlussleitungen (6.1.n) voneinander elektrisch isoliert sind.

6. Schaltanordnung (1, 100) nach Anspruch 4 oder 5, wobei das Kühlgehäuse (8.2) aus einem elektrisch isolierenden Material gebildet ist.

7. Schaltanordnung (1, 100) nach einem der Ansprüche 4 bis 6, wobei das Kühlgehäuse (8.2) eine Anzahl von ersten Trennelementen (8.3) umfasst, die eingerichtet sind, zumindest die elektrischen Anschlussleitungen (6.1.n) voneinander zu trennen.

8. Schaltanordnung (1, 100) nach Anspruch 7, wobei die ersten Trennelemente (8.3) senkrecht vom Kühlgehäuse (8.2) abragen und sich in Richtung des Anschlussblocks (6, 102) derart erstrecken, dass jeweils eines der ersten Trennelemente (8.3) in einen Trennraum (10) zwischen zumindest zwei benachbarten elektrischen Anschlussleitungen (6.1.n) hineinragt.

9. Schaltanordnung (1, 100) nach einem der vorhergehenden Ansprüche, wobei der Anschlussblock (6, 102) eine Anzahl von zweiten Trennelementen (6.3) umfasst, die eingerichtet sind, zumindest die elektrischen Anschlussleitungen (6.1.n) voneinander zu trennen.

10. Schaltanordnung (1, 100) nach Anspruch 9, wobei die zweiten Trennelemente (6.3) senkrecht vom Anschlussblock (6, 102) abragen und sich derart erstrecken, dass jeweils eines der zweiten Trennelemente (6.3) in einen oder den Trennraum (10) zwischen zumindest zwei benachbarten elektrischen Anschlussleitungen (6.1.n) hineinragt.

11. Schaltanordnung (1, 100) nach einem der Ansprüche 5 bis 10 oder 9 bis 10, wobei die ersten Trennelemente (8.3) und/oder die zweiten Trennelemente (6.3) jeweils als Trennlamellen oder Trennwände ausgebildet sind.

12. Schaltanordnung (1, 100) nach einem der Ansprüche 9 bis 11, wobei die ersten Trennelemente (8.3) und die zweiten Trennelemente (6.3) derart ausgebildet sind, dass jeweils ein Paar (P) eines ersten Trennelements (8.3) der Kühleinrichtung (8) und eines zweiten Trennelements (6.3) des Anschlussblocks (6, 102) in einem der Trennräume (10) zwischen zumindest zwei benachbarten elektrischen Anschlussleitungen (6.1.n) angeordnet ist.

13. Schaltanordnung (1, 100) nach einem der vorgehenden Ansprüche, wobei die Kühleinrichtung (8) einen Lüfter (8.1) oder eine Klimaanlage umfasst oder durch einen Lüfter (8.1) oder eine Klimaanlage gebildet ist.

14. Schaltanordnung (1, 100) nach einem der vorhergehenden Ansprüche, wobei das Gehäuse (2) im Bereich des Anschlussblocks (6, 102) und/oder der Kühleinrichtung (8) mindestens eine Gehäuseklappe (2.4) umfasst.
